# EUROPEAN PATENT APPLICATION

(11) **EP 1 204 232 A1**
(43) Date of publication of application: **08.05.2002**
(21) Application number: 00309843.1
(22) Date of filing: 06.11.2000
(51) Int. Cl.: H04L 1/20

(54) **Detection of uncorrectable data blocks in coded communications systems**

(71) Applicant: LUCENT TECHNOLOGIES INC., Murray Hill, New Jersey 07974-0636 (US)
(72) Inventor: Bayer, Ludwig, Dr., 90542 Eckental (DE); Bleisteiner, Bernd M., 90765 Fuerth (DE); Dohmen, Ralf, 90459 Nürnberg (DE); Wehrhahn, Erich, 91058 Erlangen (DE); de Lind van Wijngaarden, Adriaan, Somerset County NJ 07920 (US)
(74) Representative: Buckley, Christopher Simon Thirsk

(57) **Abstract**

A method of evaluating the quality of received signals of a data flow comprising data blocks containing code words each including an original information part and a redundant part, formed at the transmitter by an encoder (ECE) from the original information part, wherein a quality signal (BE) indicating whether or not a block error is correctable, is produced.

The receiver apparatus comprises an error correcting decoder (ECD) for detecting and correcting the errors in the code word received and a uncorrectable block-error detector (UBED) which includes an evaluation unit for examining whether the corrected data block contains a valid code word or not, and for producing a quality signal (BE).

## Description

### Field of the Invention

The invention relates to a method of evaluating the quality of received signals of a data flow which consists of error correctable data blocks, each formed of an information part and a check code part, and particularly to a method for detecting uncorrectable block errors (UBE). The invention relates also to circuitry for carrying out the evaluation method.

### Background of the Invention

Data in high-speed transmission systems are often transmitted via optical signals. During the transmission between the transmitter and the receiver signals are subject to degradation by dispersion, cross-talk, attenuation, etc., generally termed noise. This noise changes the signal shape. When the signal has included the information data in binary format, signal degradation leads to errors during the bit detection in the optical receiver.

The bit errors can be corrected to some degree when channel coding is used, termed forward error correction (FEC). This is done by adding redundant data to the information data within the error correction encoder (ECE) in the transmitter. The error correcting encoder (ECE) fills the data block with a code word that contains the information data and the redundant data in form of symbols (sets of bits) or the check bits.

In case of bit errors, the data block can be restored only if the number of defect bits or symbols does not exceed a predetermined number t of bits or symbols.

When the defects exceed t, the code word cannot be restored exactly from the received data block, and the received information data contained in the data block may be corrupted.

Commonly used error correction decoders (ECD) include means for error correction, but there exists a problem when the number of errors exceeds t, the error correction capability. In such a case, the error correction decoder (ECD) may operate wrongly:
the decoder decides to correct, but inserts additional errors and delivers an invalid code word in the data block.

### Summary of the Invention

The invention is based on the problem of detecting all detectable miscorrections when the number of errors in the received data block exceeds the error correction capability of the decoder.

The invention is defined in claims 1 and 3.

Within the invention, the data block corrected in the receiver by the error correcting decoder (ECD) is used in a separate detector, termed "uncorrectable block error detector" (UBED) that checks whether the corrected data block contains a code word that is valid or not. If the code word is valid, the corrected data block is output. In the other case, the detection of an uncorrected block error (UBE) is indicated, and a block error signal BE is produced. If the respective application tolerates the delay introduced by the uncorrectable block error detector (UBED), then the received data block with the errors is output, otherwise the wrongly corrected data block by the error correcting decoder (ECD) is output.

The invention can be implemented at low costs by simply adding means for checking if the data block contains a valid code word or not.

### Brief Description of the Drawings

- Fig. 1: is a first embodiment of the invention of an optical data transmission system, and
- Fig. 2: is a second embodiment of the invention.

### Description of the Preferred Embodiment

The drawings show a transmitter unit which includes a data source, an encoder ECE, an optical transmitter and a receiver unit with an optical receiver, a decoder ECD, a detector UBED and a data sink. The transmitter and receiver units are connected through an optical channel which is subjected to noise. Thus, the figures show the typical architecture for a system with forward error correction (FEC). According to invention, the system is extended with an uncorrectable block error detector (UBED).

The figures show that, in the optical channel between optical transmitter and the optical receiver, the transmitted signals are degraded by noise. The consequence is that the output of the optical receiver may contain bit errors. The data redundancy introduced in the error correction encoder (ECE) enables the error correction decoder (ECD) to correct the errors in the data block. As indicated above, the error correction can be done only when the number of errors in the data block does not exceed t.

When the number of the errors exceeds the error correction capability of the error correction decoder (ECD) and its output data block does not contain a valid code word, then the uncorrectable block error detector (UBED) will detect and signal the block error (BE) condition.

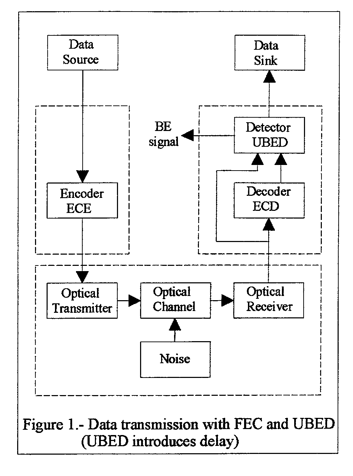

In the Fig.1 embodiment, the uncorrectable block error detector (UBED) is arranged in the data path to the data sink. Furthermore, the input to the decoder ECD is also connected to the input of the detector UBED.

In applications that are not time critical (Fig1.), the uncorrectable block error detector (UBED) checks the data block (therefore introduces a signal delay). It outputs the data block (as corrected by the decoder ECD) only if no block error (BE) condition is detected, otherwise it outputs the erroneous data block from the input of the error correction decoder (ECD).

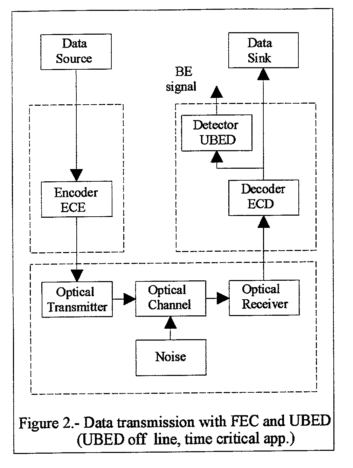

Fig. 2 shows an embodiment for time critical applications where the uncorrectable block error detector (UBED) is arranged out of the data path to the data sink, the decoder ECD outputs the "corrected" data block, even if such "corrected" data block contains a code word that is not valid. However, the uncorrectable block error detector (UBED) will check the "correct" block and produce a BE signal indicating the block miscorrection.

### Examples

The examples are given to show that the method of detecting uncorrectable block errors (UBE) may be employed for any type of code that can detect errors in a data block, also in cases that can not be corrected.

### Algebraic Codes

The most used codes of this type in optical data transmission are the Bose-Chaudhury-Hocquenghem (BCH) and Reed-Solomon (RS) codes. For further details, see S. Lin and D. J. Costello, Jr. "Error control coding - fundamentals and applications", Prentice-Hall, 1983 [1] and G. C. Clark, Jr. and J. B. Cain "Error-correction coding for digital communications", Plenum Press, 1981 [2].

Both codes use code words, consisting of bits or symbols that define the coefficients of polynomials. The polynomials have a subset of roots at well defined positions. This subset is identical to the set of roots of a generator polynomial and is common to all polynomials corresponding to code words associated to that generator polynomial.

To detect uncorrectable block errors, the data block at the output of the error correcting decoder must be checked.

The validity check for the data blocks consists first in building a polynomial as for the code words. Then the polynomial is evaluated at all the roots of the generator polynomial. These values must be zero for data blocks containing code words. If one or more do not vanish, an uncorrectable block error exists.

### Parity check and low density parity check codes

This codes are used in almost any data transmission system. The code words in parity check codes are characterized by a set of constraints that define subsets of bits of the data block in which an even number of bits is equal to 1. For any given set of information data bits, the set of redundant data bits is defined in the encoder so that the constraints are fulfilled and the data block contains a code word.

To detect uncorrectable block errors, the data block at the output of the error correcting decoder must be checked.

The validity check for the data blocks consists in the evaluation of the constraints. If one or more do not hold, an uncorrectable block error exists.

## Claims

1. A method of evaluating the quality of received signals of a data flow comprising data blocks containing code words each including an original information part and a redundant part being formed at the transmitter by an encoder (ECE) from the original information part, comprising the steps of:
correcting the data block received in a decoder (ECO),
**characterized by** the further steps of:
checking the validity of the code word in the data block; and
producing a quality signal (BE) indicating whether or not a block error is correctable.

2. The method of claim 1
wherein when an uncorrectable block error is detected, the decoder (ECD) is bypassed by the uncorrected data block received.

3. An apparatus for carrying out the method of claim 1 comprising:
an error correcting decoder (ECD) for detecting errors and correcting the errors in the code word received; and
a uncorrectable block-error detector (UBED) including an evaluation unit for examining whether the received data block contains a valid code word or not.

4. The apparatus set forth in claim 3
further comprising means for bypassing the error correcting decoder (ECD) when an uncorrectable block error has been detected.
